# EUROPÄISCHE PATENTSCHRIFT

(11) **EP 3 495 225 B1**
(45) Veröffentlichungstag und Bekanntmachung des Hinweises auf die Patenterteilung: **29.03.2023**
(21) Anmeldenummer: 19000033.1
(22) Anmeldetag: 08.02.2016
(51) Int. Cl.: B61C 3/00, B60L 3/04

(54) **FAHRZEUG, INSBESONDERE SCHIENENFAHRZEUG, MIT ANTRIEBSSTEUEREINRICHTUNG**
VEHICLE, ESPECIALLY RAILWAY VEHICLE, WITH A DRIVE CONTROL DEVICE
VÉHICULE, EN PARTICULIER VÉHICULE SUR RAILS DOTÉ D'UN DISPOSITIF DE COMMANDE D'ENTRAÎNEMENT

(30) Priorität: 24.02.2015 DE 102015203303
(43) Veröffentlichungstag der Anmeldung: 12.06.2019
(62) Teilanmeldung aus: 16705913.8
(73) Patentinhaber: Siemens Mobility GmbH, 81739 München (DE)
(72) Erfinder: Hilpert, Johannes, 96129 Strullendorf (DE)
(74) Vertreter: Siemens Patent Attorneys

(56) Entgegenhaltungen:
- EP-A1- 2 461 070
- WO-A1-2007/088725
- WO-A1-2014/034678
- DE-A1-102007 037 357
- US-A- 6 155 365

## Beschreibung

Die Erfindung bezieht sich auf ein Fahrzeug, insbesondere Schienenfahrzeug, mit einem einen oder mehrere elektrische Motoren aufweisenden Antrieb, einer mit dem Antrieb in Verbindung stehenden und diesen ansteuernden Antriebssteuereinrichtung und einer ein Bremsleistungsberechnungsmodul aufweisenden Überwachungseinrichtung, wobei das Bremsleistungsberechnungsmodul einen Bremsleistungswert des oder der Motoren ermittelt und mittelbar oder unmittelbar mit einer Bremssteuereinrichtung des Fahrzeugs in Verbindung steht. Ein solches Fahrzeug ist in dem US-Patent US 6,155,365 A beschrieben.

Weitere Fahrzeuge mit elektrischen Motoren und Antriebssteuereinrichtungen sind aus den Schriften WO2014/034678 A1, WO2007/088725 A1, EP 2 461 070 A1 und DE 10 2007 037 357 A1 bekannt.

Der Erfindung liegt die Aufgabe zugrunde, ein Fahrzeug, insbesondere Schienenfahrzeug anzugeben, das gegenüber herkömmlichen Fahrzeugen vergleichbarer Art ein höheres Maß an Sicherheit gewährleistet.

Diese Aufgabe wird erfindungsgemäß durch ein Fahrzeug mit den Merkmalen gemäß Patentanspruch 1 gelöst. Vorteilhafte Ausgestaltungen des erfindungsgemäßen Fahrzeugs sind in Unteransprüchen angegeben.

Danach ist erfindungsgemäß vorgesehen, dass die Überwachungseinrichtung zusätzlich zu der Antriebssteuereinrichtung vorhanden ist und unabhängig von der Antriebssteuereinrichtung arbeitet und das Bremsleistungsberechnungsmodul der Bremssteuereinrichtung des Fahrzeugs den unabhängig von der Antriebssteuereinrichtung ermittelten Bremsleistungswert des oder der Motoren übermittelt.

Weist das Fahrzeug einen den oder die Motoren des Antriebs mit elektrischer Energie versorgenden Gleichspannungszwischenkreis auf, so wird es als vorteilhaft angesehen, wenn das Bremsleistungsberechnungsmodul anhand des Antriebsstrommesswerts, insbesondere anhand des durch Summenbildung der Motorstrommesswerte gebildeten Antriebsstrommesswerts, und einem die Spannung im Gleichspannungszwischenkreis angebenden Spannungsmesswert den Bremsleistungswert der Motoren ermittelt.

Außerdem ist es vorteilhaft, wenn die Überwachungseinrichtung derart ausgestaltet ist, dass sie den Antriebsstrom des Antriebs quantitativ erfasst und den Antrieb abschaltet, wenn zumindest eine Antriebsausschaltbedingung erfüllt ist und gleichzeitig ein den Antriebsstrom angebender Antriebsstrommesswert einen aktiven Antriebsbetrieb des Antriebs anzeigt. Ein Vorteil dieser letztgenannten Ausgestaltung ist darin zu sehen, dass durch die zusätzlich zur Antriebssteuereinrichtung vorgesehenen Überwachungseinrichtungen ein höheres Maß an Betriebssicherheit als bei herkömmlichen Fahrzeugen erreicht wird. Dies ist darauf zurückzuführen, dass bei dieser vorteilhaften Variante ein aktiver Antriebsbetrieb von der Überwachungseinrichtung unterbunden wird, wenn zumindest eine Antriebsausschaltbedingung erfüllt ist, und zwar unabhängig von der parallelen bzw. zeitgleichen Ansteuerung durch die Antriebssteuereinrichtung.

Weist der Antrieb zwei oder mehr Motoren auf, so wird es als vorteilhaft angesehen, wenn die Überwachungseinrichtung ein Stromerfassungsmodul aufweist, das den Antriebsstrommesswert durch Summenbildung von Motorstrommesswerten, die die durch die Motoren fließenden Motorströme angeben, bildet.

Vorzugsweise ist das Stromerfassungsmodul derart ausgestaltet, dass es die Summenbildung vorzeichenbezogen unter Berücksichtung der jeweiligen Stromrichtung der Motorströme durchführt, wobei Motorströme, deren Stromrichtung einen Energieverbrauch des jeweiligen Motors anzeigt, mit einem anderen Vorzeichen berücksichtigt werden als Motorströme, deren Stromrichtung eine Energieerzeugung des jeweiligen Motors anzeigt. Mit anderen Worten ist es vorteilhaft, wenn das Stromerfassungsmodul derart ausgestaltet ist, dass es die Motorstrommesswerte von Motoren, die sich im Antriebsbetrieb befinden, bei der Addition mit einem anderen Vorzeichen berücksichtigt als die Motorstrommesswerte von Motoren, die sich im Bremsbetrieb befinden und eine gegenüber dem Antriebsbetrieb inverse Stromrichtung aufweisen.

Vorzugsweise weist die Überwachungseinrichtung ein Traktionsabschaltmodul auf, das derart ausgestaltet ist, dass es das Vorzeichen des durch Summenbildung gebildeten Antriebsstrommesswerts auswertet und den Antrieb abschaltet, wenn zumindest eine Antriebsausschaltbedingung erfüllt ist und das Vorzeichen des Antriebsstrommesswerts den aktiven Antriebsbetriebs der Motoren insgesamt (- bzw. in der Summe gesehen -) anzeigt.

Vorzugsweise weist das Traktionsabschaltmodul einen Signaleingang zur Eingabe eines Schnellbremssignals, das im Falle einer Schnellbremsung eine solche anzeigt, auf, und prüft das Vorliegen der zumindest einen Antriebsausschaltbedingung zumindest auch anhand dieses Schnellbremssignals.

Darüber hinaus wird es als vorteilhaft angesehen, wenn das Traktionsabschaltmodul einen Signaleingang zur Eingabe eines Fernsteuerungssignals, das im Falle einer Fernsteuerung des Fahrzeugs eine solche anzeigt, aufweist und das Vorliegen der zumindest einen Antriebsausschaltbedingung zumindest auch anhand dieses Fernsteuerungssignals prüft.

Auch ist es vorteilhaft, wenn das Traktionsabschaltmodul einen Signaleingang zur Eingabe eines Besetztsignals, das im Fall eines besetzten Führerraums einen solchen anzeigt, sowie einen Signaleingang zur Eingabe eines Traktionsfreigabesignals, das im Falle eines Vorliegens eines führerseitigen Antriebsbefehls einen solchen anzeigt, aufweist und das Vorliegen der zumindest einen Antriebsausschaltbedingung zumindest auch anhand dieser beiden genannten Signale prüft.

Mit Blick auf ein schnelles und zuverlässiges Abschalten des Antriebs wird es als vorteilhaft angesehen, wenn das Fahrzeug einen elektrischen Schalter aufweist, der im geschlossenen Zustand den Antrieb mit einem Energieversorgungsanschluss des Fahrzeugs verbindet und im geöffneten Zustand den Antrieb von dem Energieversorgungsanschluss trennt, und die Überwachungseinrichtung mit dem elektrischen Schalter in Verbindung steht und diesen mittels eines Steuersignals öffnet, wenn die zumindest eine Antriebsausschaltbedingung erfüllt ist und gleichzeitig der Antriebsstrommesswert den aktiven Antriebsbetrieb des Antriebs anzeigt.

Das Stromerfassungsmodul, das Traktionsabschaltmodul und das Bremsleistungsberechnungsmodul können durch Hardwaremodule gebildet sein. Alternativ kann vorgesehen sein, dass die Überwachungseinrichtung durch eine Recheneinrichtung gebildet ist, bei der das Stromerfassungsmodul, das Traktionsabschaltmodul und/oder das Bremsleistungsberechnungsmodul durch Softwaremodule gebildet sind, die in einem Speicher der Recheneinrichtung gespeichert und von einem oder mehreren Rechenprozessoren der Recheneinrichtung ausgeführt werden.

Die Erfindung bezieht sich außerdem auf ein Verfahren mit den Merkmalen gemäß dem nebengeordneten Patentanspruch 13.

Die Erfindung wird nachfolgend anhand von Ausführungsbeispielen näher erläutert; dabei zeigen beispielhaft
- Figur 1: ein Ausführungsbeispiel für ein erfindungsgemäßes Schienenfahrzeug, bei dem ein Antrieb zwei Motoren aufweist, die jeweils mit einem individuell zugeordneten Wechselrichter mit Motorstrom versorgt werden,
- Figur 2: ein Ausführungsbeispiel für ein erfindungsgemäßes Schienenfahrzeug, bei dem ein Antrieb lediglich einen einzigen Motor aufweist, und
- Figur 3: ein Ausführungsbeispiel für ein erfindungsgemäßes Schienenfahrzeug, bei dem ein Antrieb zwei Motoren aufweist, die von ein und demselben Wechselrichter mit Motorstrom versorgt werden.

In den Figuren werden der Übersicht halber für identische oder vergleichbare Komponenten stets dieselben Bezugszeichen verwendet.

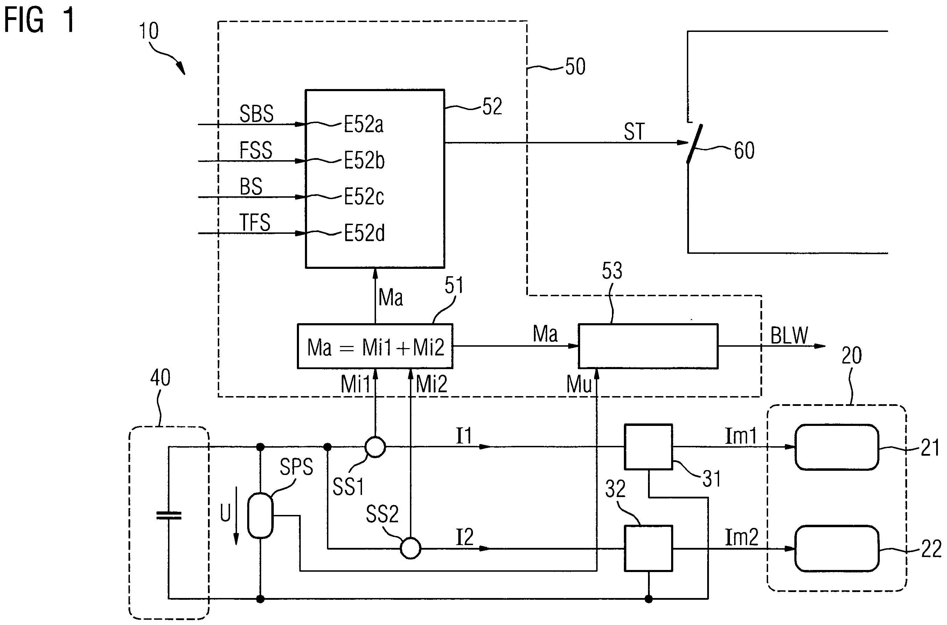

Die Figur 1 zeigt Betriebskomponenten eines Schienenfahrzeugs 10 in einer schematischen Darstellung. Man erkennt einen Antrieb 20, der zwei Motoren 21 und 22 aufweist. Die beiden Motoren 21 und 22 werden von Wechselrichtern 31 und 32 mit Motorstrom Im1 und Im2 versorgt.

Die beiden Wechselrichter 31 und 32 stehen mit einem Gleichspannungszwischenkreis 40 in Verbindung, der die beiden Wechselrichter 31 und 32 mit elektrischer Energie versorgt. Die von dem Gleichspannungszwischenkreis 40 in die beiden Wechselrichter 31 und 32 eingespeisten Eingangsströme sind in der Figur 1 mit den Bezugszeichen I1 und I2 bezeichnet.

Die Speisung des Gleichspannungszwischenkreises 40 mit elektrischer Energie ist prinzipiell beliebig und daher in der Figur 1 nicht weiter dargestellt. Beispielsweise kann der Gleichspannungszwischenkreis 40 von einem Gleichrichter gespeist werden, der mit einem elektrischen Transformator in Verbindung steht, und der Transformator kann mit einem Stromabnehmer des Schienenfahrzeugs verbunden sein.

Die Ansteuerung der beiden Motoren 21 und 22 des Antriebs 20 erfolgt bei dem Schienenfahrzeug 10 gemäß Figur 1 mittels einer Antriebssteuereinrichtung, die aus Gründen der Übersicht nicht näher dargestellt ist. Zusätzlich zu dieser in der Figur 1 nicht dargestellten Antriebssteuereinrichtung weist das Schienenfahrzeug 10 eine Überwachungseinrichtung 50 auf, die unabhängig von der Antriebssteuereinrichtung, also parallel zu dieser, arbeitet.

Wie weiter unten noch näher im Detail erläutert werden wird, ist die Überwachungseinrichtung 50 derart ausgestaltet, dass sie den Antriebsstrom, der in den Antrieb 20 hineinfließt, quantitativ erfasst und den Antrieb 20 abschaltet, wenn zumindest eine Antriebsausschaltbedingung erfüllt ist und gleichzeitig ein den Antriebsstrom angebender Antriebsstrommesswert Ma einen aktiven Antriebsbetrieb des Antriebs anzeigt.

Zur Ermittlung des Antriebsstrommesswerts Ma bzw. zur Ermittlung des Antriebsstroms, der in den Antrieb 20 hineinfließt, ist die Überwachungseinrichtung 50 mit einem Stromerfassungsmodul 51 ausgestattet. Das Stromerfassungsmodul 51 steht mit Stromsensoren SS1 und SS2 in Verbindung, die die Eingangsströme I1 und 12, die in die beiden Wechselrichter 31 und 32 hineinfließen, messen.

Die in die Wechselrichter 31 und 32 hineinfließenden Eingangsströme I1 und I2 geben die durch die Motoren fließenden Motorströme Im1 und Im2 quantitativ an, so dass die von den beiden Stromsensoren SS1 und SS2 gebildeten Messwerte Motorstrommesswerte für die beiden Motoren 21 und 22 des Antriebs 20 bilden. Die Motorstrommesswerte, die die Stromsensoren SS1 und SS2 erzeugen und in das Stromerfassungsmodul 51 einspeisen, sind in der Figur 1 mit den Bezugszeichen Mi1 und Mi2 gekennzeichnet.

Das Stromerfassungsmodul 51 der Überwachungseinrichtung 50 ist als Summenbildner ausgestaltet und somit in der Lage, die Motorstrommesswerte Mi1 und Mi2 vorzeichengerecht und damit unter Berücksichtigung der Stromrichtung zu addieren und durch Summenbildung der Motorstrommesswerte Mi1 und Mi2 den Antriebsstrommesswert Ma zu bilden, der den in den Antrieb 20 hinein- oder herausfließenden Antriebsstrom angibt.

Mit dem Stromerfassungsmodul 51 steht ein Traktionsabschaltmodul 52 der Überwachungseinrichtung 50 in Verbindung. Das Traktionsabschaltmodul 52 wertet den Antriebsstrommesswert Ma aus und schaltet den Antrieb 20 bzw. die beiden Motoren 21 und 22 ab, wenn der Antriebsstrommesswert Ma einen aktiven Antriebsbetrieb des Antriebs 20 anzeigt und gleichzeitig eine Antriebsausschaltbedingung erfüllt ist.

Zur Feststellung des Antriebsbetriebs des Antriebs 20 wertet das Traktionsabschaltmodul 52 das Vorzeichen des Antriebsstrommesswerts Ma aus; denn das Vorzeichen des Antriebsstrommesswerts Ma gibt an, ob der Antrieb 20 in der Summe das Schienenfahrzeug 10 antreibt oder bremst. Wird nämlich in der Summe mehr Motorstrom verbraucht, als generiert wird, so arbeitet der Antrieb 20 als Energieverbraucher und somit als aktive Antriebskomponente. Wird in der Summe von den Motoren 21 und 22 mehr Generatorstrom erzeugt, als zum Antrieb verbraucht wird, so arbeitet der Antrieb 20 in der Summe als Bremse.

Zur Prüfung der erwähnten Antriebsausschaltbedingung weist das Traktionsabschaltmodul 52 vier Signaleingänge E52a, E52b, E52c und E52d auf.

Der Signaleingang E52a dient zur Eingabe eines Schnellbremssignals SBS, das im Falle einer Schnellbremsung des Schienenfahrzeugs 10 eine solche anzeigt.

Der Signaleingang E52b des Traktionsabschaltmoduls 52 dient zur Eingabe eines Fernsteuerungssignals FSS, das im Falle einer aktiven Fernsteuerung des Schienenfahrzeugs eine solche anzeigt.

Der Signaleingang E52c des Traktionsabschaltmoduls 52 dient zur Eingabe eines Besetztsignals BS, das im Falle eines besetzten Führerraums des Schienenfahrzeugs 10 einen solchen anzeigt.

Der Signaleingang E52d dient zur Eingabe eines Traktionsfreigabesignals TFS, das im Falle eines Vorliegens eines führerseitigen Antriebsbefehls einen solchen anzeigt.

Das Traktionsabschaltmodul 52 wertet die Signale an den vier Signaleingängen E52a bis E52d aus und prüft gleichzeitig anhand des Antriebsstrommesswerts Ma, ob ein aktiver Antriebsbetrieb des Antriebs 20 vorliegt.

Stellt das Traktionsabschaltmodul 52 fest, dass der Antriebsstrommesswert Ma einen aktiven Antriebsbetrieb des Antriebs anzeigt und gleichzeitig das Schnellbremssignal SBS eine Schnellbremsung anzeigt, so erzeugt sie ein Steuersignal ST, mit dem ein Schalter 60 geöffnet wird.

Der Schalter 60 verbindet im geschlossenen Zustand den Antrieb 20 des Schienenfahrzeugs 10 mit einem nicht gezeigten Energieversorgungsanschluss des Schienenfahrzeugs 10 und trennt im geöffneten Zustand den Antrieb 20 von diesem Energieversorgungsanschluss. Durch das Erzeugen des Steuersignals ST bzw. durch das Öffnen des Schalters 60 wird ein Abschalten des Antriebs 20 unabhängig davon erzwungen, ob die Antriebssteuereinrichtung den Antrieb 20 weiter aktiv betreiben will oder nicht. Die Überwachungseinrichtung 50 bildet somit eine unabhängige Komponente, die unabhängig von der Antriebssteuereinrichtung den Antrieb 20 abschalten kann, wenn dies aus betrieblicher Sicht erforderlich ist.

Das Traktionsabschaltmodul 52 erzeugt das Steuersignal ST zum Öffnen des Schalters 60 ebenfalls, wenn im Falle eines aktiven Antriebsbetriebs des Antriebs 20 kein zulässiges bzw. aktives Fernsteuerungssignal FSS vorliegt und das Besetztsignal BSS einen unbesetzten Führerraum anzeigt.

Die Überwachungseinrichtung 50 ist bei dem Schienenfahrzeug 10 gemäß Figur 1 außerdem mit einem Bremsleistungsberechnungsmodul 53 ausgestattet, das den Antriebstrommesswert Ma des Stromerfassungsmoduls 51 auswertet. Das Bremsleistungsberechnungsmodul 53 steht über einen Spannungssensor SPS mit dem Gleichspannungszwischenkreis 40 in Verbindung und misst die Ausgangsspannung U des Gleichspannungszwischenkreises 40. Der Spannungsmesswert, der die Spannung U angibt, ist in der Figur 1 mit dem Bezugszeichen Mu gekennzeichnet.

Das Bremsleistungsberechnungsmodul 53 wertet den Antriebsstrommesswert Ma des Stromerfassungsmoduls 51 sowie den Spannungsmesswert Mu des Spannungssensors SPS aus und ermittelt anhand dieser beiden Messwerte im Falle eines Generatorbetriebs des Antriebs 20 einen Bremsleistungswert BLW, der die jeweilige Bremsleistung des Antriebs 20 anzeigt. Die Berechnung der Bremsleistung ist möglich, weil der Antriebsstrommesswert Ma und der Spannungsmesswert Mu eine Ermittlung der in Richtung des Gleichspannungszwischenkreises 40 gespeisten elektrischen Leistung angibt, die ein Maß für die Bremsleistung ist.

Der von dem Bremsleistungsberechnungsmodul 53 erzeugte Bremsleistungswert BLW kann in eine in der Figur 1 nicht gezeigte Bremssteuereinrichtung des Schienenfahrzeugs 10 eingespeist werden, das die Steuerung des Bremssystems des Schienenfahrzeugs 10 durchführt.

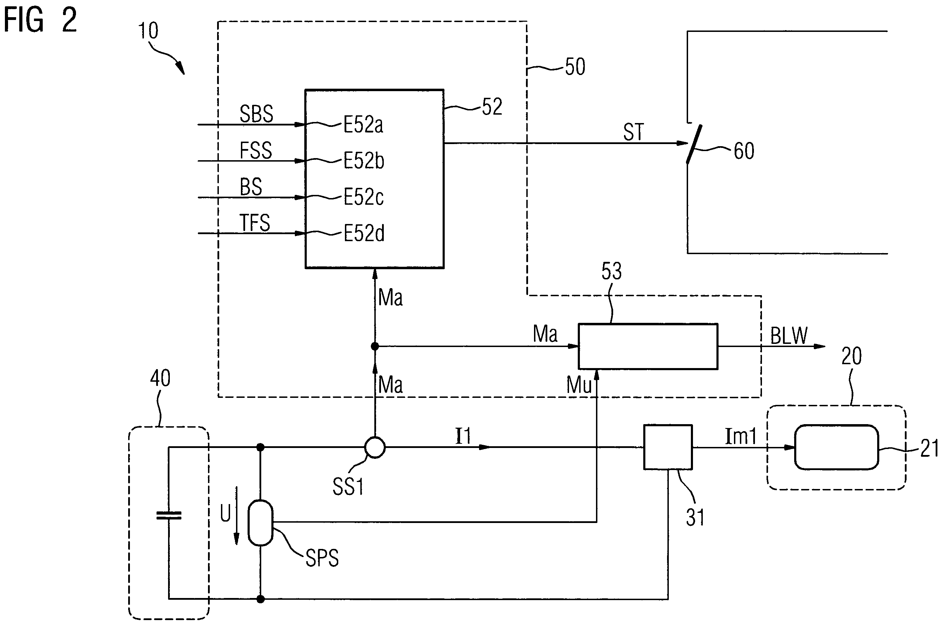

Die Figur 2 zeigt ein Ausführungsbeispiel für ein Schienenfahrzeug 10, bei dem ein Antrieb 20 lediglich einen einzigen Motor 21 aufweist. Der Motor 21 wird von einem Wechselrichter 31 mit einem Motorstrom Im1 versorgt. Die Stromversorgung des Wechselrichters 31 erfolgt durch einen Gleichspannungszwischenkreis 40, der einen Eingangsstrom I1 in den Wechselrichter 31 einspeist.

Da bei dem Ausführungsbeispiel gemäß Figur 2 lediglich ein Motor 21 vorhanden ist, kann die Überwachungseinrichtung 50 ohne ein Stromerfassungsmodul, wie das Stromerfassungsmodul 51 gemäß Figur 1, auskommen. Der von dem Stromsensor SS1 erzeugte Motorstrommesswert Mi1 bildet somit unmittelbar den Antriebsstrommesswert Ma des Antriebs 20 und kann von dem Traktionsabschaltmodul 52 unmittelbar zur Bildung des Steuersignals ST herangezogen werden.

Im Übrigen gelten die Ausführungen im Zusammenhang mit dem Ausführungsbeispiel gemäß Figur 1 bei dem Schienenfahrzeug 10 gemäß Figur 2 entsprechend.

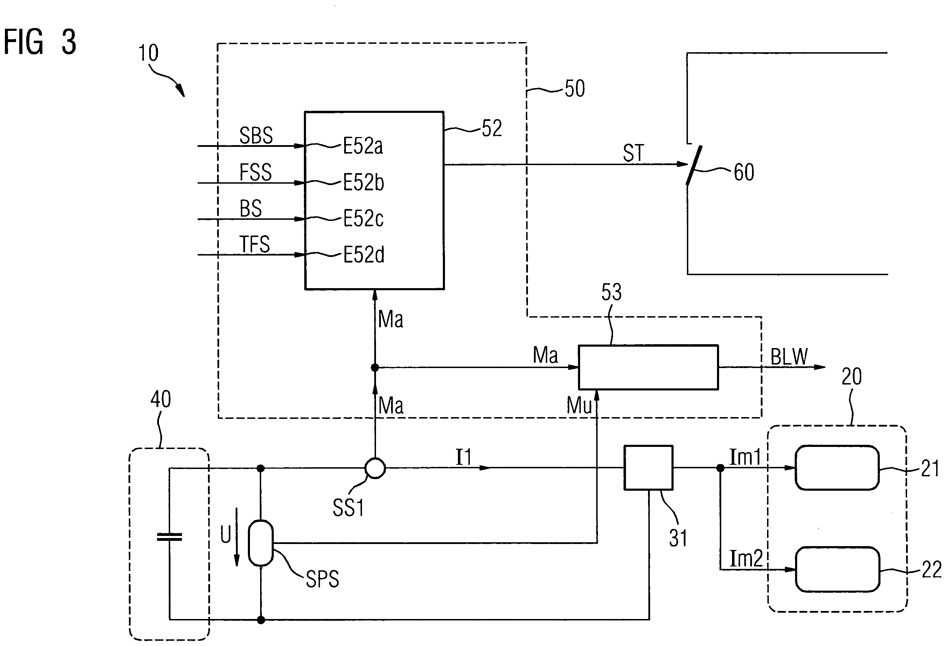

Die Figur 3 zeigt ein Ausführungsbeispiel für ein Schienenfahrzeug 10, bei dem ein Antrieb 20 zwei Motoren 21 und 22 aufweist. Die Motorströme Im1 und Im2 der beiden Motoren 21 und 22 werden von ein und demselben Wechselrichter 31 erzeugt, der eingangsseitig mit einem Gleichspannungszwischenkreis 40 in Verbindung steht und von diesem mit einem Eingangsstrom I1 versorgt wird.

Ein Stromsensor SS1 misst den Eingangsstrom I1 in den Wechselrichter 31 und erzeugt damit unmittelbar einen Antriebsstrommesswert Ma, der den Antriebsstrom des Antriebs 20 angibt. Eine rechentechnische Summenbildung von einzelnen Motorstrommesswerten ist bei dem Ausführungsbeispiel gemäß Figur 3 nicht erforderlich, da der Eingangsstrom I1 in den Wechselrichter 31 bereits einen Summenwert, der die Stromsumme der Motorströme Im1 und Im2 angibt, darstellt.

Im Übrigen gelten die Erläuterungen im Zusammenhang mit dem Ausführungsbeispiel gemäß Figur 2 für das Ausführungsbeispiel gemäß Figur 3 entsprechend.

Bei den Ausführungsvarianten gemäß den Figuren 1 bis 3 können das Stromerfassungsmodul 51, das Traktionsabschaltmodul 52 und das Bremsleistungsberechnungsmodul 53 durch Hardwaremodule gebildet sein. Vorteilhaft ist es jedoch, wenn die Überwachungseinrichtung 50 durch eine Recheneinrichtung gebildet ist, bei der das Stromerfassungsmodul 51, das Traktionsabschaltmodul 52 und das Bremsleistungsberechnungsmodul 53 durch Softwaremodule gebildet sind, die in einem Speicher der Recheneinrichtung gespeichert und von einem oder mehreren Rechenprozessoren der Recheneinrichtung ausgeführt werden. Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der beigefügten Ansprüche zu verlassen.

### Bezugszeichenliste

- 10: Schienenfahrzeug
- 20: Antrieb
- 21: Motor
- 22: Motor
- 31: Wechselrichter
- 32: Wechselrichter
- 40: Gleichspannungszwischenkreis
- 50: Überwachungseinrichtung
- 51: Stromerfassungsmodul
- 52: Traktionsabschaltmodul
- 53: Bremsleistungsberechnungsmodul
- 60: Schalter

- BLW: Bremsleistungswert
- BS: Besetztsignal
- E52a: Signaleingang
- E52b: Signaleingang
- E52c: Signaleingang
- E52d: Signaleingang
- FSS: Fernsteuerungssignal
- Im1: Motorstrom
- Im2: Motorstrom
- I1: Eingangsstrom
- I2: Eingangsstrom
- Ma: Antriebsstrommesswert
- Mi1: Motorstrommesswert
- Mi2: Motorstrommesswert
- Mu: Spannungsmesswert
- SBS: Schnellbremssignal
- SPS: Spannungssensor
- SS1: Stromsensor
- SS2: Stromsensor
- ST: Steuersignal
- TFS: Traktionsfreigabesignal
- U: Ausgangsspannung

## Patentansprüche

1. Fahrzeug, insbesondere Schienenfahrzeug (10), mit einem einen oder mehrere elektrische Motoren (21, 22) aufweisenden Antrieb (20), einer mit dem Antrieb (20) in Verbindung stehenden und diesen ansteuernden Antriebssteuereinrichtung und einer ein Bremsleistungsberechnungsmodul (53) aufweisenden Überwachungseinrichtung (50), wobei das Bremsleistungsberechnungsmodul (53) einen Bremsleistungswert (BLW) des oder der Motoren (21, 22) ermittelt und mittelbar oder unmittelbar mit einer Bremssteuereinrichtung des Fahrzeugs in Verbindung steht, **dadurch gekennzeichnet, dass**
- die Überwachungseinrichtung (50) zusätzlich zu der Antriebssteuereinrichtung vorhanden ist und unabhängig von der Antriebssteuereinrichtung arbeitet und
- das Bremsleistungsberechnungsmodul (53) der Bremssteuereinrichtung des Fahrzeugs den unabhängig von der Antriebssteuereinrichtung ermittelten Bremsleistungswert (BLW) des oder der Motoren (21, 22) übermittelt.

2. Fahrzeug nach Anspruch 1, **dadurch gekennzeichnet, dass** das Bremsleistungsberechnungsmodul (53) konfiguriert ist, zumindest auch anhand eines Antriebsstrommesswerts (Ma) den Bremsleistungswert (BLW) des oder der Motoren (21, 22) zu ermitteln.

3. Fahrzeug nach einem der voranstehenden Ansprüche, **dadurch gekennzeichnet, dass** das Bremsleistungsberechnungsmodul (53) konfiguriert ist, den Antriebsstrommesswert (Ma) eines Stromerfassungsmoduls (51) sowie einen Spannungsmesswert (Mu) eines Spannungssensors (SPS) auszuwerten und anhand dieser beiden Messwerte den Bremsleistungswert (BLW) zu ermitteln.

4. Fahrzeug nach einem der voranstehenden Ansprüche 1 bis 2, **dadurch gekennzeichnet, dass** das Bremsleistungsberechnungsmodul (53) konfiguriert ist, einen Antriebsstrommesswert (Ma), der durch einen Motorstrommesswert (Mi1) eines Stromsensors (SS1) gebildet wird, sowie einen Spannungsmesswert (Mu) eines Spannungssensors (SPS) auszuwerten und anhand dieser beiden Messwerte den Bremsleistungswert (BLW) zu ermitteln.

5. Fahrzeug nach den Ansprüchen 3 oder 4, **dadurch gekennzeichnet, dass** der Antriebsstrommesswert (Ma) und der Spannungsmesswert (Mu) eine in Richtung eines Gleichspannungszwischenkreises (40) gespeiste elektrische Leistung angeben, die ein Maß für die Bremsleistung ist.

6. Fahrzeug nach einem der voranstehenden Ansprüche, **dadurch gekennzeichnet, dass** das Bremsleistungsberechnungsmodul konfiguriert ist, den Bremsleistungswert der Motoren anhand eines durch Summenbildung von Motorstrommesswerten gebildeten Antriebsstrommesswerts zu ermittteln.

7. Fahrzeug nach Anspruch 2, **dadurch gekennzeichnet, dass**
- das Fahrzeug einen den oder die Motoren (21, 22) mit elektrischer Energie versorgenden Gleichspannungszwischenkreis (40) aufweist und
- das Bremsleistungsberechnungsmodul (53) anhand des Antriebsstrommesswerts (Ma) und einem die Spannung (U) im Gleichspannungszwischenkreis (40) angebenden Spannungsmesswert (Mu) den Bremsleistungswert (BLW) der Motoren (21, 22) ermittelt.

8. Fahrzeug nach einem der voranstehenden Ansprüche, **dadurch gekennzeichnet, dass**
- die Überwachungseinrichtung (50) derart ausgestaltet ist, dass sie den Antriebsstrom des Antriebs (20) quantitativ erfasst und den Antrieb (20) abschaltet, wenn zumindest eine Antriebsausschaltbedingung erfüllt ist und gleichzeitig ein den Antriebsstrom angebender Antriebsstrommesswert (Ma) einen aktiven Antriebsbetrieb des Antriebs (20) anzeigt.

9. Fahrzeug nach einem der voranstehenden Ansprüche,
**dadurch gekennzeichnet, dass**
- der Antrieb (20) zwei oder mehr Motoren (21, 22) aufweist und
- die Überwachungseinrichtung (50) ein Stromerfassungsmodul (51) aufweist, das den Antriebsstrommesswert (Ma) durch Summenbildung von Motorstrommesswerten (Mi1, Mi2), die die durch die Motoren (21, 22) fließenden Motorströme (Im1, Im2) angeben, bildet.

10. Fahrzeug nach einem der voranstehenden Ansprüche 8 bis 9,
**dadurch gekennzeichnet, dass** ein Traktionsabschaltmodul (52) der Überwachungseinrichtung (50) derart ausgestaltet ist, dass es das Vorzeichen des durch Summenbildung gebildeten Antriebsstrommesswerts (Ma) auswertet und den Antrieb (20) abschaltet, wenn zumindest eine Antriebsausschaltbedingung erfüllt ist und das Vorzeichen des Antriebsstrommesswerts (Ma) den aktiven Antriebsbetrieb der Motoren (21, 22) insgesamt anzeigt.

11. Fahrzeug nach einem der voranstehenden Ansprüche,
**dadurch gekennzeichnet, dass** ein bzw. das Traktionsabschaltmodul (52) der Überwachungseinrichtung (50) einen Signaleingang (E52a) zur Eingabe eines Schnellbremssignals (SBS), das im Falle einer Schnellbremsung eine solche anzeigt, aufweist und das Vorliegen der zumindest einen Antriebsausschaltbedingung zumindest auch anhand dieses Schnellbremssignals (SBS) prüft.

12. Fahrzeug nach einem der voranstehenden Ansprüche,
**dadurch gekennzeichnet, dass**
- das Fahrzeug einen elektrischen Schalter (60) aufweist, der im geschlossenen Zustand den Antrieb (20) mit einem Energieversorgungsanschluss des Fahrzeugs verbindet und im geöffneten Zustand den Antrieb (20) von dem Energieversorgungsanschluss trennt, und
- die Überwachungseinrichtung (50) mit dem elektrischen Schalter (60) in Verbindung steht und diesen mittels eines Steuersignals (ST) öffnet, wenn die zumindest eine Antriebsausschaltbedingung erfüllt ist und gleichzeitig der Antriebsstrommesswert (Ma) den aktiven Antriebsbetrieb des Antriebs (20) anzeigt.

13. Verfahren zum Betreiben eines Fahrzeugs, insbesondere Schienenfahrzeugs, das einen Antrieb (20), eine mit dem Antrieb (20) in Verbindung stehende und diese ansteuernde Antriebssteuereinrichtung und eine ein Bremsleistungsberechnungsmodul (53) aufweisende Überwachungseinrichtung aufweist, wobei das Bremsleistungsberechnungsmodul (53) einen Bremsleistungswert (BLW) des oder der Motoren (21, 22) ermittelt und mittelbar oder unmittelbar mit einer Bremssteuereinrichtung des Fahrzeugs in Verbindung steht,
**dadurch gekennzeichnet, dass**
- die Überwachungseinrichtung (50) zusätzlich zu der Antriebssteuereinrichtung vorhanden ist und unabhängig von der Antriebssteuereinrichtung betrieben wird, und zwar derart, dass das Bremsleistungsberechnungsmodul (53) der Überwachungseinrichtung (50) einen Bremsleistungswert (BLW) des oder der Motoren (21, 22) unabhängig von der Antriebssteuereinrichtung ermittelt, und
- das Bremsleistungsberechnungsmodul (53) der Bremssteuereinrichtung den Bremsleistungswert (BLW) der Motoren (21, 22) übermittelt.

14. Verfahren nach Anspruch 13,
**dadurch gekennzeichnet, dass**
- die Überwachungseinrichtung (50) derart betrieben wird, dass mit dieser der Antriebsstrom des Antriebs (20) quantitativ erfasst und der Antrieb (20) abgeschaltet wird, wenn zumindest eine Antriebsausschaltbedingung erfüllt ist und gleichzeitig ein den Antriebsstrom angebender Antriebsstrommesswert (Ma) einen aktiven Antriebsbetrieb des Antriebs (20) anzeigt.

## Claims

1. Vehicle, in particular a rail vehicle (10), with a drive (20) having one or more electric motors (21, 22), a drive controller connected to the drive (20) and controlling it, and a monitoring device (50) having a braking capacity calculation module (53), wherein the braking capacity calculation module (53) determines a braking capacity value (BLW) of the motor or motors (21, 22) and is directly or indirectly connected to a brake controller of the vehicle,
**characterised in that**
- in addition to the drive controller, the monitoring device (50) is present and works independently of the drive controller and
- the braking capacity calculation module (53) of the brake controller of the vehicle transmits the braking capacity value (BLW), determined independently of the drive controller, of the motor or motors (21, 22).

2. Vehicle according to claim 1,
**characterised in that**
the braking capacity calculation module (53) is configured to at least also determine the braking capacity value (BLW) of the motor or motors (21, 22) on the basis of a drive current measurement value (Ma).

3. Vehicle according to one of the preceding claims,
**characterised in that**
the braking capacity calculation module (53) is configured to evaluate the drive current measurement value (Ma) of a current detection module (51) as well as a voltage measurement value (Mu) of a voltage sensor (SPS) and to determine the braking capacity value (BLW) on the basis of these two measurement values.

4. Vehicle according to one of the preceding claims 1 to 2,
**characterised in that**
the braking capacity calculation module (53) is configured to evaluate a drive current measurement value (Ma), which is formed by a motor current measurement value (Mi1) of a current sensor (SS1), as well as a voltage measurement value (Mu) of a voltage sensor (SPS) and to determine the braking capacity value (BLW) on the basis of these two measurement values.

5. Vehicle according to claims 3 or 4,
**characterised in that**
the drive current measurement value (Ma) and the voltage measurement value (Mu) indicate an electrical power, fed in the direction of a DC voltage intermediate circuit (40), which is a measure of the braking capacity.

6. Vehicle according to one of the preceding claims,
**characterised in that**
the braking capacity calculation module is configured to determine the braking capacity value of the motors on the basis of a drive current measurement value formed by summation of motor current measurement values.

7. Vehicle according to claim 2,
**characterised in that**
- the vehicle has a DC voltage intermediate circuit (40) supplying the motor or motors (21, 22) with electrical energy and
- the braking capacity calculation module (53) determines a braking capacity value (BLW) of the motors (21, 22) on the basis of the drive current measurement value (Ma) and a voltage measurement value (Mu) indicating the voltage (U) in the DC voltage intermediate circuit (40).

8. Vehicle according to one of the preceding claims,
**characterised in that**
- the monitoring device (50) is designed such that it quantitatively detects the drive current of the drive (20) and switches off the drive (20) when at least one drive switch-off condition is met and at the same time a drive current measurement value (Ma) indicating the drive current indicates an active drive mode of the drive (20).

9. Vehicle according to one of the preceding claims,
**characterised in that**
- the drive (20) has two or more motors (21, 22) and
- the monitoring device (50) has a current detection module (51) which forms the drive current measurement value (Ma) by summation of motor current measurement values (Mi1, Mi2) indicating the motor currents (Im1, Im2) flowing through the motors (21, 22).

10. Vehicle according to one of the preceding claims 8 to 9,
**characterised in that**
a traction switch-off module (52) of the monitoring device (50) is designed such that it evaluates the sign of the drive current measurement value (Ma) formed by summation and switches off the drive (20) when at least one drive switch-off condition is met and the sign of the drive current measurement value (Ma) indicates the active drive mode of the motors (21, 22) overall.

11. Vehicle according to one of the preceding claims,
**characterised in that**
a or the traction switch-off module (52) of the monitoring device (50) has a signal input (E52a) for inputting a quick-action braking signal (SBS), which in the event of quick-action braking indicates this, and checks the presence of the at least one drive switch-off condition at least also on the basis of said quick-action braking signal (SBS).

12. Vehicle according to one of the preceding claims,
**characterised in that**
- the vehicle has an electrical switch (60) which in the closed state connects the drive (20) to an energy supply connection of the vehicle and in the open state isolates the drive (20) from the energy supply connection, and
- the monitoring device (50) is connected to the electrical switch (60) and opens it by means of a control signal (ST) when the at least one drive switch-off condition is met and at the same time the drive current measurement value (Ma) indicates the active drive mode of the drive (20).

13. Method for operating a vehicle, in particular a rail vehicle, which has a drive (20), a drive controller connected to the drive (20) and controlling it and a monitoring device having a braking capacity calculation module (53), wherein the braking capacity calculation module (53) determines a braking capacity value (BLW) of the motor or motors (21, 22) and is directly or indirectly connected to a brake controller of the vehicle,
**characterised in that**
- in addition to the drive controller, the monitoring device (50) is present and is operated independently of the drive controller, namely in such a manner that the braking capacity calculation module (53) of the monitoring device (50) determines a braking capacity value (BLW) of the motor or motors (21, 22) independently of the drive controller, and
- the braking capacity calculation module (53) of the brake controller transmits the braking capacity value (BLW) of the motor or motors (21, 22).

14. Method according to claim 13,
**characterised in that**
- the monitoring device (50) is operated such that the drive current of the drive (20) is quantitatively detected therewith and the drive (20) is switched off when at least one drive switch-off condition is met and at the same time a drive current measurement value (Ma) indicating the drive current indicates an active drive mode of the drive (20) .

## Revendications

1. Véhicule, notamment véhicule (10) ferroviaire, comprenant un entraînement (20) ayant un ou plusieurs moteurs (21, 22) électriques, un dispositif de commande d'entraînement en liaison avec l'entraînement (20) et commandant celui-ci et un dispositif (50) de contrôle ayant un module (53) de calcul de la puissance de freinage, dans lequel le module (53) de calcul de la puissance de freinage détermine une valeur (BLW) de puissance de freinage du ou des moteurs (21, 22) et est en liaison indirecte ou directe avec un dispositif de commande de frein du véhicule,
**caractérisé en ce que**
- le dispositif (50) de contrôle est présent, en plus du dispositif de commande d'entraînement, et travaille indépendamment du dispositif de commande de l'entraînement et
- le module (53) de calcul de la puissance de freinage transmet au dispositif de commande du frein du véhicule la valeur (BLW) de puissance de freinage du ou des moteurs (21, 22) déterminées indépendamment du dispositif de commande de l'entraînement.

2. Véhicule suivant la revendication 1,
**caractérisé en ce que**
le module (53) de calcul de la puissance de freinage est configuré pour déterminer au moins, également à l'aide d'une valeur (Ma) de mesure du courant d'entraînement, la valeur (BLW) de puissance de freinage du ou des moteurs (21, 22).

3. Véhicule suivant l'une des revendications précédentes,
**caractérisé en ce que**
le module (53) de calcul de la puissance de freinage est configuré pour évaluer la valeur (Ma) de mesure du courant d'entraînement d'un module (51) de détection de courant ainsi qu'une valeur (Mu) de mesure de tension d'un capteur (SPS) de tension et pour déterminer le valeur (BLW) de puissance de freinage à l'aide de ces deux valeurs de mesure.

4. Véhicule suivant l'une des revendications 1 à 2 précédentes,
**caractérisé en ce que**
le module (53) de calcul de la puissance de freinage est configuré pour évaluer une valeur (Ma) de mesure du courant d'entraînement, qui est formée par une valeur (Mi1) de mesure de courant du moteur d'un capteur (SS1) de courant, ainsi qu'une valeur (Mu) de mesure de tension d'un capteur (SPS) de tension et pour déterminer la valeur (BLW) de puissance de freinage à l'aide de ces deux valeurs de mesure.

5. Véhicule suivant les revendications 3 ou 4,
**caractérisé en ce que**
le valeur (Ma) de mesure du courant d'entraînement et la valeur (Mu) de mesure de la tension indiquent une puissance électrique, qui est injectée en direction d'un circuit (40) intermédiaire de tension continue et qui est une mesure de la puissance de freinage.

6. Véhicule suivant l'une des revendications précédentes,
**caractérisé en ce que**
le module de calcul de la puissance de freinage est configuré pour déterminer la valeur de puissance de freinage des moteurs, à l'aide d'une valeur de mesure du courant d'entraînement formée par formation d'une somme de valeurs de mesure de courant de moteur.

7. Véhicule suivant la revendication 2,
**caractérisé en ce que**
- le véhicule a un circuit (40) intermédiaire de tension continue alimentant le ou les moteurs (21, 22) en énergie électrique, et
- le module (53) de calcul de puissance de freinage détermine, à l'aide de la valeur (Ma) de mesure du courant d'entraînement, ainsi que d'une valeur (Mu) de mesure de tension indiquant la tension (U) dans le circuit (40) intermédiaire de tension continue, la valeur (BLW) de puissance de freinage des moteurs (21, 22).

8. Véhicule suivant l'une des revendications précédentes,
**caractérisé en ce que**
- le dispositif (50) de contrôle est conformé de manière à détecter quantitativement le courant d'entraînement de l'entraînement (20) et a mettre hors circuit l'entraînement (20), si au moins une condition de mise hors circuit de l'entraînement est satisfaite et, en même temps, une valeur (Ma) de mesure du courant de l'entraînement indiquant le courant de l'entraînement indiquent un fonctionnement d'entraînement actif de l'entraînement (20).

9. Véhicule suivant l'une des revendications précédentes,
**caractérisé en ce que**
- l'entraînement (20) a deux ou plusieurs moteurs (21, 22) et
- le dispositif (50) de contrôle a un module (51) de détection de courant, qui forme la valeur (Ma) de mesure du courant d'entraînement par formation d'une somme de valeurs (Mi1, Mi2) de mesure de courant de moteur, qui indique les courants (Im1, Im2) de moteur passant dans les moteurs (21, 22).

10. Véhicule suivant l'une des revendications 8 à 9 précédentes,
**caractérisé en ce que**
un module (52) d'arrêt de la traction du dispositif (50) de contrôle est conformé de manière à évaluer le signe de la valeur (Ma) de mesure du courant de l'entraînement formé par la formation de la somme et pour mettre hors circuit l'entraînement (20), si au moins une condition de mise hors circuit de l'entraînement est satisfaite et si le signe de la valeur (Ma) de mesure du courant de l'entraînement indique dans l'ensemble le fonctionnement de l'entraînement actif des moteurs (21, 22).

11. Véhicule suivant l'une des revendications précédentes,
**caractérisé en ce qu'**
un ou le module (52) d'arrêt de la traction du dispositif (50) de contrôle a une entrée (E52a) de signal pour l'entrée d'un signal (SBS) de frein rapide, qui indique, dans le cas d'un freinage rapide, un freinage de ce genre et contrôle la présence de la au moins une condition de mise hors circuit de l'entraînement au moins également à l'aide de ce signal (SBS) de freinage rapide.

12. Véhicule suivant l'une des revendications précédentes,
**caractérisé en ce que**
- le véhicule a un interrupteur (60) électrique, qui à l'état fermé relie l'entraînement (20) à une borne d'alimentation en énergie du véhicule et, à l'état ouvert, sépare l'entraînement (20) de la borne d'alimentation en énergie, et
- le dispositif (50) de contrôle est en liaison avec l'interrupteur (60) électrique et ouvre celui-ci au moyen d'un signal (ST) de commande, si la au moins une condition de mise en circuit de l'entraînement est satisfaite et si, en même temps, la valeur (Ma) de mesure du courant d'entraînement indique le fonctionnement d'entraînement actif de l'entraînement (20).

13. Procédé pour faire fonctionner un véhicule, notamment un véhicule ferroviaire, qui a un entraînement (20), un dispositif de commande d'entraînement en liaison avec l'entraînement (20) et commandant celui-ci et un dispositif de contrôle ayant un module (53) de calcul de la puissance de freinage, dans lequel le module (53) de calcul de la puissance de freinage détermine une valeur (BLW) de puissance de freinage du ou des moteurs (21, 22) et est en liaison directe ou indirecte avec un dispositif de commande du frein du véhicule,
**caractérisé en ce que**
- le dispositif (50) de contrôle est présent en plus du dispositif de commande de l'entraînement et on le fait fonctionner indépendamment du dispositif de commande de l'entraînement et cela, de manière à ce que le module (53) de calcul de la puissance de freinage du dispositif (50) de contrôle détermine une valeur (BLW) de puissance de freinage du ou des moteurs (21, 22) indépendamment du dispositif de commande de l'entraînement, et
- le module (53) de calcul de la puissance de freinage du dispositif de commande du frein transmet la valeur (BLW) de puissance de freinage aux moteurs (21, 22).

14. Procédé suivant la revendication 13,
**caractérisé en ce que**
- l'on fait fonctionner le dispositif (50) de contrôle de manière à détecter quantitativement par celui-ci le courant d'entraînement de l'entraînement (20) et à mettre hors circuit l'entraînement (20), si au moins un condition de mise hors circuit de l'entraînement est satisfaite et si, en même temps, une valeur (Ma) de mesure de courant d'entraînement indiquant le courant d'entraînement indique un fonctionnement d'entraînement actif de l'entraînement (20).
